# EUROPEAN PATENT APPLICATION

(11) **EP 4 181 287 A2**
(43) Date of publication of application: **17.05.2023**
(21) Application number: 22206715.9
(22) Date of filing: 10.11.2022
(51) Int. Cl.: H01M 50/222, H01M 50/231, H01M 50/233, H01M 50/251

(54) **MOVABLE CABINET AND ENERGY STORAGE APPARATUS**

(30) Priority: 12.11.2021 TW 110142229
(71) Applicant: TCC Energy Storage Technology Corporation, Taipei City 104414 (TW)
(72) Inventor: CHANG, An-Ping, 104414 TAIPEI CITY (TW); LI, Jong-Peir, 104414 TAIPEI CITY (TW)
(74) Representative: 2K Patentanwälte Blasberg Kewitz & Reichel

(57) **Abstract**

The present disclosure provides a movable cabinet and an energy storage apparatus. The movable cabinet includes a concrete main body and a flame retardant material layer. The concrete main body includes a plurality of walls forming an accommodating space. The flame retardant material layer is disposed on one or more inner surfaces of the plurality of walls in the accommodating space.

## Description

### BACKGROUND

### 1. Technical Field

The present disclosure relates to a movable cabinet and an energy storage apparatus. More specifically, the present disclosure relates to a movable cabinet including a concrete main body and an energy storage apparatus.

### 2. Description of the Related Art

In order to improve the efficiency and flexibility of energy use, energy storage development has become a trend in recent years. With the developments in battery technology (such as lithium batteries), battery energy storage apparatuses have become one of the mainstream energy storage apparatuses. Considerations such as ease of loading and transportation and weather resistance have led metal containers commonly used in international shipping being currently popular for energy storage.

However, in the process of battery storage and transportation, various factors (such as overcharging, impact, electrical control system errors, and defects in the operating environment or process) can damage separators in the batteries, such that the positive electrode and the negative electrode can contact and generate a short circuit, resulting in a high-temperature chemical reaction that can ignite the combustible organic components in the battery, and damage equipment adjacent to the storage and increase occurrence of fires.

### SUMMARY

In one or more embodiments, a movable cabinet includes a concrete main body and a flame retardant material layer. The concrete main body includes a plurality of walls forming an accommodating space. The flame retardant material layer is disposed on one or more inner surfaces of the plurality of walls in the accommodating space.

In one or more embodiments, an energy storage apparatus includes a movable cabinet and at least one battery system. The movable cabinet has an accommodating space. The movable cabinet is configured to withstand a flame having a temperature equaling or exceeding 600°C. The battery system is fastened to the movable cabinet.

### BRIEF DESCRIPTION OF THE DRAWINGS

Aspects of the present disclosure are best understood from the following detailed description when read with the accompanying drawings. It is noted that various features may not be drawn to scale, and the dimensions of the various features may be arbitrarily increased or reduced for clarity of discussion.
FIG. 1A is a schematic view of a movable cabinet in accordance with some embodiments of the present disclosure.
FIG. 1B is a cross-section of a movable cabinet in accordance with some embodiments of the present disclosure.
FIG. 1C is a cross-section of a movable cabinet in accordance with some embodiments of the present disclosure.
FIG. 2 is a schematic view of a battery system in accordance with some embodiments of the present disclosure.
FIG. 2A is a schematic view of a battery pack in accordance with some embodiments of the present disclosure.
FIG. 3A is a partial perspective view of a movable cabinet and a battery system in accordance with some embodiments of the present disclosure.
FIG. 3B is a partial perspective view of a movable cabinet in accordance with some embodiments of the present disclosure.
FIG. 4A is a perspective view of an energy storage apparatus in accordance with some embodiments of the present disclosure.
FIG. 4B is a perspective view of an energy storage apparatus in accordance with some embodiments of the present disclosure.
FIG. 4C is a perspective view of an energy storage apparatus in accordance with some embodiments of the present disclosure.
FIG. 4D is a perspective view of an energy storage apparatus in accordance with some embodiments of the present disclosure.
FIG. 5A is a schematic view of a movable cabinet in accordance with some embodiments of the present disclosure.
FIG. 5B is a schematic view of a door of a movable cabinet and a partial perspective view of a concrete main body and a flame retardant material layer in accordance with some embodiments of the present disclosure.
FIG. 6 is a schematic view of a door of a movable cabinet in accordance with some embodiments of the present disclosure.
FIG. 7A is an exploded view of a door of a movable cabinet in accordance with some embodiments of the present disclosure.
FIG. 7B is a partial cross-section of a door of a movable cabinet in accordance with some embodiments of the present disclosure.
FIG. 8A is a perspective view of a movable cabinet in accordance with some embodiments of the present disclosure.
FIG. 8B is a perspective view of a movable cabinet in accordance with some embodiments of the present disclosure.

Common reference numerals are used throughout the drawings and the detailed description to indicate the same or similar elements. The present disclosure will be more apparent from the following detailed description taken in conjunction with the accompanying drawings.

### DETAILED DESCRIPTION

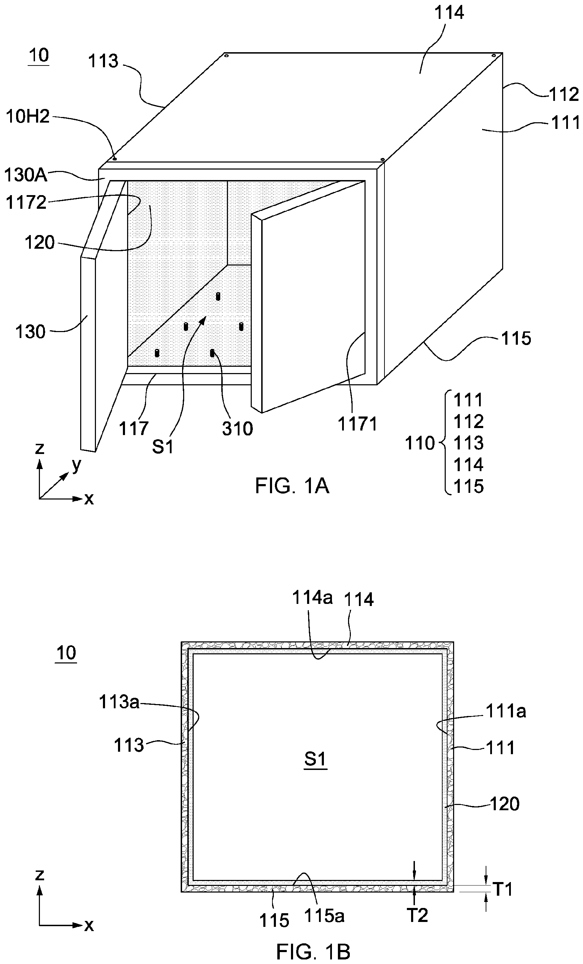

FIG. 1A is a schematic view of a movable cabinet 10 in accordance with some embodiments of the present disclosure, and FIG. 1B is a cross-section of a movable cabinet 10 in accordance with some embodiments of the present disclosure. In some embodiments, FIG. 1B is a cross-section of the structure shown in FIG. 1A in X direction. The movable cabinet 10 includes a concrete main body 110, a flame retardant material layer 120, and a door 130. Some elements (e.g., the door 130) are omitted from FIG. 1B for clarity.

The concrete main body 110 may include a pluraltiy of walls (e.g., walls 111, 112, 113, 114, and 115) forming an accommodating space S1. In some embodiments, the accommodating space S1 is of sufficient size that operators can enter therein to perform maintenance and/or operations on the functional components or equipments disposed in the accommodating space S1. In some embodiments, the walls 111, 112, and 113 of the concrete main body 110 may be sidewalls, the wall 114 may be a top plate, and the wall 115 may be a bottom plate. In some embodiments, each of the walls 111, 112, 113, 114, and 115 has a thickness T1 less than or equal to about 5cm. In some embodiments, each of the walls 111, 112, 113, 114, and 115 has a thickness T1 less than or equal to about 2.5cm. In some embodiments, as shown in FIG. 1A and FIG. 1B, the walls 111, 112, 113, 114, and 115 have plate structures, and outer surfaces of the walls 111, 112, 113, 114, and 115 are substantially planar surfaces. In some embodiments, one or more of the walls 111, 112, 113, 114, and 115 may include a non-plate structure. For example, at least one or more of the outer surfaces of the walls 111, 112, 113, 114, and 115 may have a specific stero-configuration, such as a wavy structure, a porous structure, a recess structure, a protruded rib structure, or other stero-configuration of any shape.

In some embodiments, the concrete main body 110 may include synthetic fibers. In some embodiments, the synthetic fiber has a length from about 4mm to about 20mm and a diameter of about 0.2mm. In some embodiments, the synthetic fibers are present in the concrete main body 110 in an amount from about 30 kg/m³ to about 60 kg/m³. The synthetic fibers can increase the bending strength of the concrete main body 110. In some embodiments, the concrete main body 110 is formed of an ultra-high performance concrete (UHPC).

According to some embodiments of the present disclosure, with the concrete main body 110 including the aforesaid synthetic fibers and/or being formed of an UHPC, the concrete main body 110 can have bending resistance comparable to that of a general reinforced concrete without requiring a reinforcement structure (e.g., a reinforcement cage and/or a reinforcement assembly formed from a plurality of stirrups) to be mixed within the walls of the concrete main body 110. In addition, since no reinforced concrete is required to be disposed in the concrete main body 110 to increase the bending resistance, the concrete main body 110 can have reduced wall thickness, such that overall weight of the movable cabinet 110 can be reduced, which is advantageous to transportation thereof.

In some embodiments, the concrete main body 110 may further include one or more than one cements of different compositions, various different particle materials, oxides, and various different additives. In some embodiments, the concrete main body 110 may include Portland cement, silica fume (in a powdery state), silica sand (with particle size of less than about 2cm), quartz powder (with particle size from about 20mm to about 30mm), a water reducing agent, a defoaming agent, a swelling agent, or a combination thereof.

In some embodiments, the concrete main body 110 may include from about 800 kg/m³ to about 900 kg/m³ of one or more of a Type I Portland cement, a Type II Portland cement, a Type III Portland cement, a Type IV Portland cement, and a Type V Portland cement. In some embodiments, the concrete main body 110 may include from about 400 kg/m³ to about 500 kg/m³ of one type of Type I, II, III, IV, or V Portland cement and from about 400 kg/m³ to about 500 kg/m³ of another type of Type I, II, III, IV, or V Portland cement . In some embodiments, the concrete main body 110 may include from 120 kg/m³ to about 180 kg/m³ of a silica fume. In some embodiments, the concrete main body 110 may include from about 900 kg/m³ to about 1000 kg/m³ of silica sand. In some embodiments, the concrete main body 110 may include from 30 kg/m³ to about 150 kg/m³ of quartz powder. In some embodiments, with the mentioned combination of silica fume and quartz powder, the concrete main body 110 can have a compressive strength exceeding that of a general concrete. In some embodiments, the addition of oxides can be used to adjust the appearance color of the concrete main body 110.

In some embodiments, the concrete main body 110 may include from about 10 kg/m³ to about 20 kg/m³ of a water reducing agent. In some embodiments, the concrete main body 110 may include equal to or less than about 10 kg/m³ of a defoaming agent and equal to or less than about 25 kg/m³ of a swelling agent.

In some embodiments, the concrete main body 110 has an unit structural weight equalling or exceeding 2300 kg/m³. In some embodiments, the concrete main body 110 has an unit structural weight from about 2300 kg/m³ to about 2700 kg/m³. In some embodiments, the concrete main body 110 has a compressive strength equalling or exceeding 120 MPa. In some embodiments, the concrete main body 110 has a compressive strength from about 120 MPa to about 180 MPa. In some embodiments, the concrete main body 110 has a maximum bending strength exceeding 15 MPa. Accordingly, the concrete main body 110 requires no reinforced cage and/or reinforcement assembly formed from a plurality of stirrups to increase the bending resistance, such that the concrete main body 110 can have reduced wall thickness, and the overall weight of the movable cabinet 10 can be reduced. In addition, the concrete main body 110 may provide high compressive strength and a high bending strength for to the movable cabinet 10, which can thus be used in a relatively extreme environment (e.g., an environment subjected to a high-temperature flame) while still can maintaining integrity of the entire structure.

In some embodiments, the concrete main body 110 has a thermal conductivity equal to or less than about 1.8 W/m-K. In some embodiments, the concrete main body 110 has a thermal conductivity from about 1.6 W/m·K to about 1.8 W/m-K. Compared with metal materials or a general concrete (having thermal conductivity from about 1.9 W/m·K to about 2.1 W/m·K), the concrete main body 110 of the present disclosure has a better thermal insulation effect, which is beneficial in reducing heat conduction between accommodating space S1 and the exterior of concrete main body 110. When the devices or elements in the accommodating space S1 need to be maintained at a specific high temperature or a specific low temperature, the excellent thermal insulation effect of the concrete main body 110 helps to reduce the energy required by the airconditioning equipment, which can reduce cost and has additional effects of environmental protection, energy saving, and carbon reduction.

In some embodiments, the concrete main body 110 is integrally formed. In some embodiments, a mixed concrete slurry may be poured into a mold with a predetermined shape, followed by curing and demoulding to form the integrally-formed concrete main body 110 (e.g., the walls 111, 112, 113, 114, and 115 can be integrally formed).

In some embodiments, the concrete main body 110 may include multiple partial structural components or walls (e.g., the walls 111, 112, 113, 114, and 115) assembled together. In some embodiments, a mixed concrete slurry may be poured into a mold with a predetermined shape, followed by curing and demoulding to form multiple partial structural components or walls, and then these partial structural components or walls may be connected by connectors (e.g., screws) or by grouting to fill joint regions between the partial structural components or walls, so as to form the concrete main body 110 assembled by multiple partial structural components or walls.

The flame retardant material layer 120 may be disposed on one or more inner surfaces of the walls in the accommodating space S1. For exmaple, the flame retardant material layer 120 may be disposed on the inner surface 111a of the wall 111, the inner surface (not shown in drawings) of the wall 112, the inner surface 113a of the wall 113, the inner surface 114a of the wall 114, and the inner surface 115a of the wall 115. In some embodiments, the flame retardant material layer 120 directly contacts the walls (e.g., the walls 111, 112, 113, 114, and 115) of the concrete main body 110. In some embodiments, the flame retardant material layer 120 directly contacts the one or more inner surfaces of the walls (e.g., the walls 111, 112, 113, 114, and 115) of the concrete main body 110. In some embodiments, the flame retardant material layer 120 includes a ceramic fiber board, a ceramic fiber blanket, a refractory clay, a thermally insulative refractory brick, or a combination thereof. In some embodiments, the flame retardant material layer 120 has a thickness T2 equal to or less than about 5cm. In some embodiments, the flame retardant material layer 120 has a thickness T2 equal to or less than about 2.5cm.

In some embodiments, a mixed concrete slurry may be poured into a mold with a predetermined shape, and before the mixed concrete slurry is completely solidified, the flame retardant material layer 120 may be adhered to the semi-product of the mixed concrete slurry, followed by curing. As such, the cured concrete can be firmly connected to the flame retardant material layer 120, so that the connection interface between the concrete main body 110 and the flame retardant material layer 120 is provided with a high bonding strength. Therefore, delamination of the flame retardant material layer 120 caused by high heat can be prevented.

In some embodiments, the movable cabinet 10 is configured to withstand a flame having a temperature equaling or exceeding 600°C. In some embodiments, the movable cabinet 10 is configured to withstand a flame having a temperature equaling or exceeding 900°C. In some embodiments, the movable cabinet 10 is configured to withstand a flame having a temperature from about 900°C to about 1200°C. In some embodiments, the concrete main body 110 and the flame retardant material layer 120 as a whole are configured to withstand a flame having a temperature equaling or exceeding 600°C. In some embodiments, the concrete main body 110 and the flame retardant material layer 120 as a whole are configured to withstand a flame having a temperature equaling or exceeding 900°C. In some embodiments, the concrete main body 110 and the flame retardant material layer 120 as a whole are configured to withstand a flame having a temperature from about 900°C to about 1200°C.

The door 130 may be pivotally connected to a lateral edge (e.g., at least one of a lateral edge 1171 and a lateral edge 1172) of an opening 117 of the concrete main body 110. In some embodiments, a door frame 130A is disposed on the lateral edge of the opening 117. In some embodiments, the door 130 may be pivotally connected to the opening 117 of the concrete main body 110 through the door frame 130A. In some embodiments, the door 130 may be pivotally connected to at least one of the lateral edge 1171 and the lateral edge 1172 of the opening 117 of the concrete main body 110 through the door frame 130A. In some embodiments, the door 130 may include two door plates that open in opposite directions and pivotally connect to the lateral edges 1171 and 1172, respectively. In some embodiments, the door 130 is pivotally connected to the door frame 130A on the lateral edges 1171 and 1172 of the opening 117 of the concrete main body 110. In some embodiments, the door 130 may include a single door plate with a side pivotally connected to the lateral edge 1171 or the lateral edge 1172 of the opening 117 of the concrete main body 110. In some embodiments, the door 130 may be pivotally connected to the the lateral edge 1171 or the lateral edge 1172 of the opening 117 of the concrete main body 110 through the door frame 130A. In some embodimeents, the door 130 may be a refractory door. In some embodiments, the door frame 130A may include a refractory material.

In some embodiments, as shown in FIG. 1A, the movable cabinet 10 includes a door 130 covering the entire area of a lateral surface (i.e., the lateral surface opposite to the wall 112, that is, the lateral surface where the opening 117 is located) of the movable cabinet 10. In some embodiments, in addition to the walls 111-115, the movable cabinet 10 may further include another wall at a lateral surface opposite to the wall 112, the opening 117 only exposing a partial area of the wall, and the door 130 may be pivotally connected to the lateral edge of the opening 117 of the wall. In some other embodiments, the movable cabinet 10 may include two or more doors. In some embodiments, these doors may be disposed on the same wall or different walls (the same lateral surface or different lateral surfaces), and these doors may have different designs (e.g., may be a design of two door plates open toward opposite directions or a design of a single door plate).

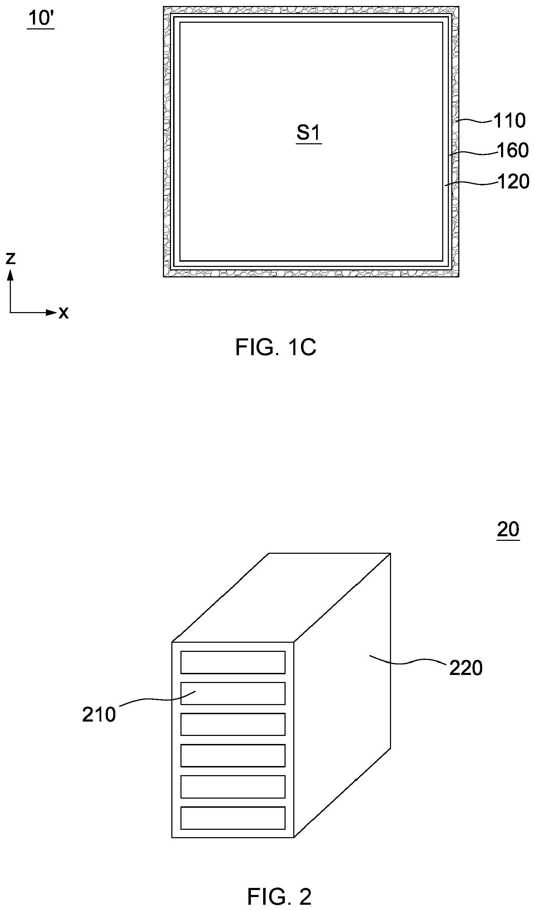

FIG. 1C is a cross-section of a movable cabinet 10' in accordance with some embodiments of the present disclosure. Some elements (e.g., the door 130) are omitted from FIG. 1C for clarity.

In some embodiments, the movable cabinet 10' may further include a flame retardant adhesive layer 160. In some embodiments, the flame retardant adhesive layer 160 is disposed between the concrete main body 110 and the flame retardant material layer 120. In some embodiments, the flame retardant material layer 120 includes a ceramic fiber board, a ceramic fiber blanket, a thermally insulative refractory brick, or a combination thereof, and the flame retardant adhesive layer 160 includes a refractory clay. In some embodiments, the refractory clay includes an aluminum-based material.

In some embodiments, a mixed concrete slurry may be poured into a mold with a predetermined shape, followed by curing and demoulding to form the concrete main body 110 or the multiple partial structural components (e.g., the walls) of the concrete main body 110. Next, a flame retardant adhesive layer 160 is coated on the surface of the concrete main body 110, and then the flame retardant material layer 120 is adhered to the flame retardant adhesive layer 160, followed by curing. In some embodiments, the curing temperature at this stage is from about 25°C to about 105°C, and the curing time is from about 1 day to about 7 days. As such, the cured flame retardant adhesive layer 160 (e.g., after being heated) can form chemical bonding between the concrete main body 110 and the flame retardant material layer 120, such that the concrete main body 110 and the flame retardant material layer 120 can be firmly bonded together without delamination.

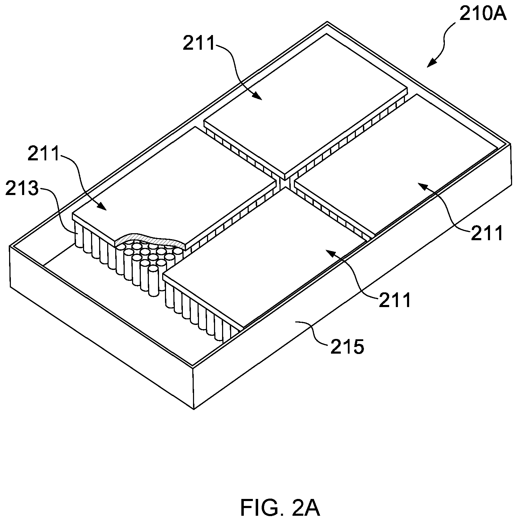

FIG. 2 is a schematic view of a battery system 20 in accordance with some embodiments of the present disclosure.

In some embodiments, the movable cabinet 10 is configured to accommodate at least one battery system 20. In some embodiments, the battery system 20 may include a plurality of battery packs 210, and each of the battery packs 210 may include a plurality of battery modules. In some embodiments, the battery system 20 may include an accommodating casing 220, and the battery packs 210 are disposed in the accommodating casing 220.

FIG. 2A is a schematic view of a battery pack 210A in accordance with some embodiments of the present disclosure. Some elements are omitted from FIG. 2A in order to clearly show and describe the main structure of the battery pack 210A.

In some embodiments, the battery pack 210A may include a plurality of battery modules 211 and a housing 215, and the battery modules 211 are disposed in the housing 215. In some embodiments, each of the battery modules 211 may include a plurality of batteries 213. In some embodiments, the battery 213 may be a cylindrical lithium ion battery or other types of battery. For example, the cylindrical lithium ion battery may be an 18650 battery, a 21700 battery, or other types of lithium ion battery. In some embodiments, the battery modules 211 in the battery pack 210A are connected in series, and the batteries 213 in the battery module 211 are connected in parallel. In some embodiments, an extending direction between the positive and negative electrodes of the battery 213 is perpendicular to an extending direction of a bottom plate of the housing 215.

When the batteries 213 (e.g., lithium batteries) in the battery pack 211 are charged or discharged, various factors (e.g., overcharge, impact, electronic control system errors, and defects in the operating environment or the process) may cause lithium ions to puncture the separator in the battery, such that the electrodes contact and create a short circuit, resulting in a high-temperature chemical reaction that ignites the combustible organic components in the battery. The high temperature generated by the thermal runaway of the lithium battery may be as high as from 600°C to 1000°C or even higher. When the heat energy diffuses from the ignited battery 213 to the surroundings, the cells of other adjacent batteries 213 will also heat up. When the tolerance temperature of the cells is exceeded (e.g., the tolerance temperature of a lithium battery is about 150° C.), the adjacent heated cells will also self-dissipate and cause the battery packs 211 and even the entire battery system 20 to burn out. Moreover, the combustion of the positive electrode material inside the battery comes from the chemical reaction of the internal materials, so it will lead to continuous generation of flame, and the temperature of the flame may be as high as from 600°C to 1000°C.

According to some embodiments of the present disclosure, with the movable cabinet 10 including a composite structure including the concrete main body 110 and the flame retardant material layer 120, the high temperature generated by the thermal runaway of the lithium battery can be effectively limited within the movable cabinet 10, and the occurrence of fire accidents caused by the spread of flames can be prevented by only pouring water into the movable cabinet 10 at the same time. In addition, since the high temperature generated by the thermal runaway of the lithium battery can beare contained within the movable cabinet 10, the flame does not escape outside of the movable cabinet 10 to cause the flame to spread. Therefore, the disaster relief process can be more convenient and safer.

Furthermore, conventional metal energy storage cabinets are prone to deformation, twisting, bending, etc., when subjected to high temperatures, which leads to the collapse of the metal container and allows flames to escape outside of the metal container, which makes it difficult to control the fire spread. In contrast, according to some embodiments of the present disclosure, the concrete main body 110 of the movable cabinet 10 has a high compressive strength and a high bending resistance, such that the composite structure of the concrete main body 110 and the flame retardant material layer 120 does not soften and deform to collapse even in a high temperature environment, and thus the process of disaster relief can be more convenient and safer. Furthermore, the concrete main body 110 of the present disclosure can provide sufficient structural strength for the movable cabinet 10 with no need for embedded steel bars or only a few steel bars. Compared with conventional reinforced concrete, the movable cabinet 10 of the present disclosure has reduced weight, which is further beneficial to transportation and movement.

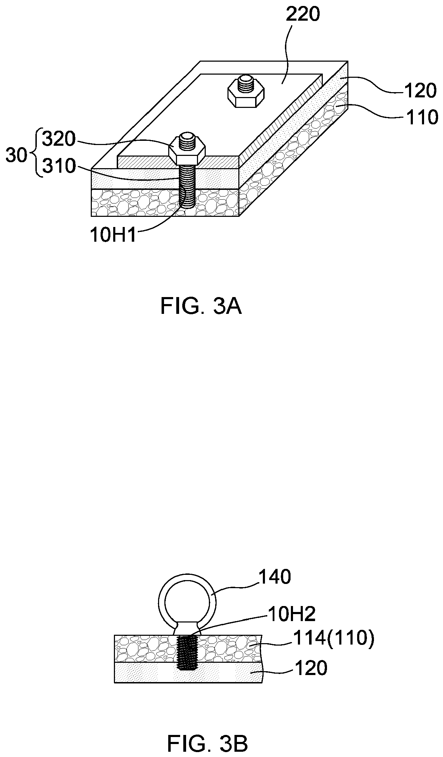

FIG. 3A is a partial perspective view of a movable cabinet 10 and a battery system 20 in accordance with some embodiments of the present disclosure. In some embodiments, FIG. 3A is a partial perspective view of a structure including the accommodating casing 220 shown in FIG. 2 with its bottom plate locked to a wall (e.g., the wall 111, 112, 113, 114, or 115) of the concrete main body 110 of the movable cabinet 10 shown in FIG. 1.

In some embodiments, the battery system 20 is locked to at least a wall of the concrete main body 110 of the movable cabinet 10. In some embodiments, the battery system 20 is locked to at least a wall of the concrete main body 110 through a locking mechanism 30. In some embodiments, the accommodating casing 220 of the battery system 20 is locked to at least a wall of the concrete main body 110 through the locking mechanism 30.

In some embodiments, the locking mechanism 30 may include a screw 310 and a threaded fastener 320, the movable cabinet 10 has a lock hole 10H1, and the screw 310 is screwed and locked into the lock hole 10H1. In some embodiments, the screw 310 is disposed in the lock hole 10H1 to be locked to the lock hole 10H1 through the threaded fastener 320. In some embodiments, the screw 310 is disposed in a lock hole of a bottom plate of the accommodating casing 220 and the lock hole 10H1 to be locked to the lock hole 10H1 by the threaded fastener 320, such that the battery system 20 is locked to the movable cabinet 10.

In some embodiments, the locking mechanism 30 is further locked to the flame retardant material layer 120. The lock hole 10H1 may penetrate the flame retardant material layer 120 and at least a portion of the wall of the concrete main body 110. In some embodiments, the lock hole 10H1 penetrates the flame retardant material layer 120 and at least a portion of the wall of the concrete main body 110, and a bottom of the lock hole 10H1 is within the wall of the concrete main body 110.

FIG. 3B is a partial perspective view of a movable cabinet 10 in accordance with some embodiments of the present disclosure. In some embodiments, FIG. 3B is a partial perspective view of the structure of the wall 114 of the concrete main body 110 of the movable cabinet 10 shown in FIG. 1.

In some embodiments, the movable cabinet 10 may include at least a hanger component 140 locked to the concrete main body 110. In some embodiments, the movable cabinet 10 has a lock hole 10H2, and the screw of the hanger component 140 is disposed in the lock hole 10H2. In some embodiments, the lock hole 10H2 penetrates the wall (e.g., the wall 114) of the concrete main body 110 and a portion of the flame retardant material layer 120. In some embodiments, the movable cabinet 10 may be lifted up and moved by a hanger equipment through the hanger component 140.

In some embodiments, a mold with a predetermined shape (e.g., having a protrusion structure with a lock hole profile) may be used, and a mixed concrete slurry may be poured into the mold with the predetermined shape, followed by curing and demoulding to form the concrete main body 110 having the lock holes 10H1 and 10H2.

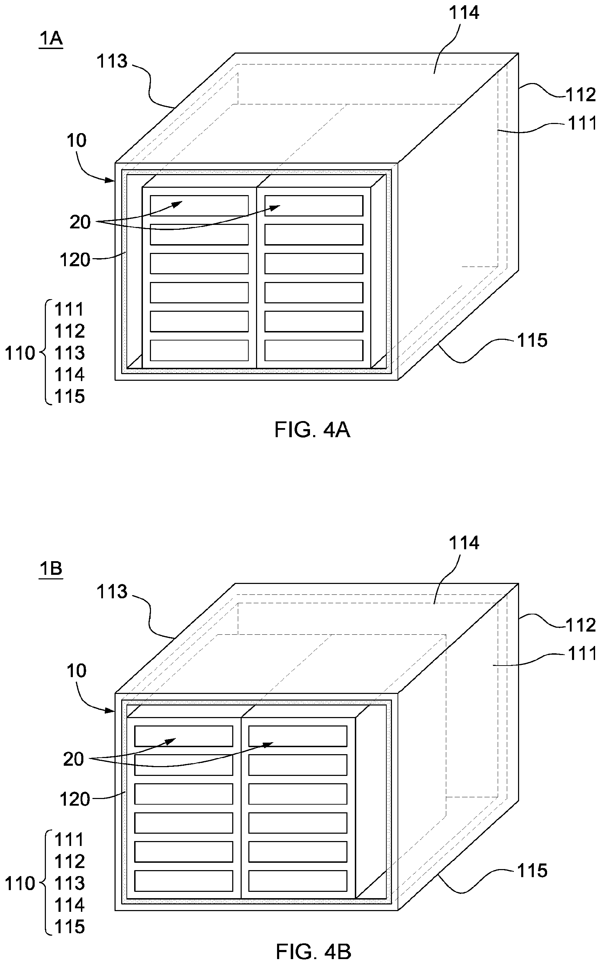

FIG. 4A is a perspective view of an energy storage apparatus 1A in accordance with some embodiments of the present disclosure. The energy storage apparatus 1A includes a movable cabinet 10 and one or more battery systems 20.

In some embodiments, the battery system 20 is fastened to the movable cabinet 10. In some embodiments, the battery system 20 is fastened to the wall 115 of the concrete main body 110 of the movable cabinet 10. In some embodiments, the battery system 20 may be locked to the wall 115 of the concrete main body 110 of the movable cabinet 10 through the locking mechanism 30 shown in FIG. 3A.

FIG. 4B is a perspective view of an energy storage apparatus 1B in accordance with some embodiments of the present disclosure. The energy storage apparatus 1B includes a movable cabinet 10 and one or more battery systems 20. In some embodiments, the battery system 20 is fastened to the walls 113 and 115 of the concrete main body 110 of the movable cabinet 10.

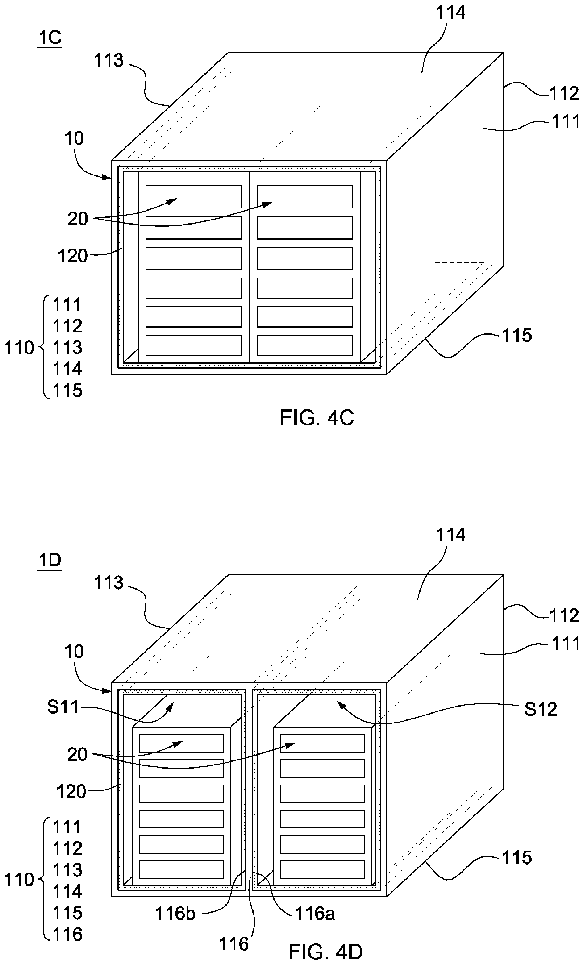

FIG. 4C is a perspective view of an energy storage apparatus 1C in accordance with some embodiments of the present disclosure. The energy storage apparatus 1C includes a movable cabinet 10 and one or more battery systems 20. In some embodiments, the battery system 20 is fastened to the walls 114 and 115 of the concrete main body 110 of the movable cabinet 10.

FIG. 4D is a perspective view of an energy storage apparatus 1D in accordance with some embodiments of the present disclosure. The energy storage apparatus 1D includes a movable cabinet 10 and one or more battery systems 20.

In some embodiments, the concrete main body 110 may further include a separation wall 116 to separate the accommodating space S1 into a plurality of sub-spaces (e.g., sub-spaces S11 and S12). In some embodiments, the flame retardant material layer 120 is disposed on two opposite surfaces 116a and 116b of the separation wall 116.

In some embodiments, each of the sub-space S11 and the sub-space S12 may house one or more battery systems 20 therein. In some embodiments, the battery systems 20 may be locked to one or more walls (e.g., the walls 112, 113, 114, and 115) in the sub-space S11 and one or more walls (e.g., the walls 111, 112, 114, and 115) in the sub-space S12, respectively. In some embodiments, the battery system 20 in the sub-space S11 may be locked to the separation wall 116. In some embodiments, the battery system 20 in the sub-space S12 may be locked to the separation wall 116.

According to some embodiments of the present disclosure, the design of the separation wall 116 can restrict the thernal runaway of the battery system within the single sub-space in which the battery system is disposed, such that the possibility of the flame spreading to other sub-spaces or even the interior of the entire movable cabinet 10 can be reduced. Therefore, the occurrence of fire accidents caused by the spread of flames can be prevented more effectively.

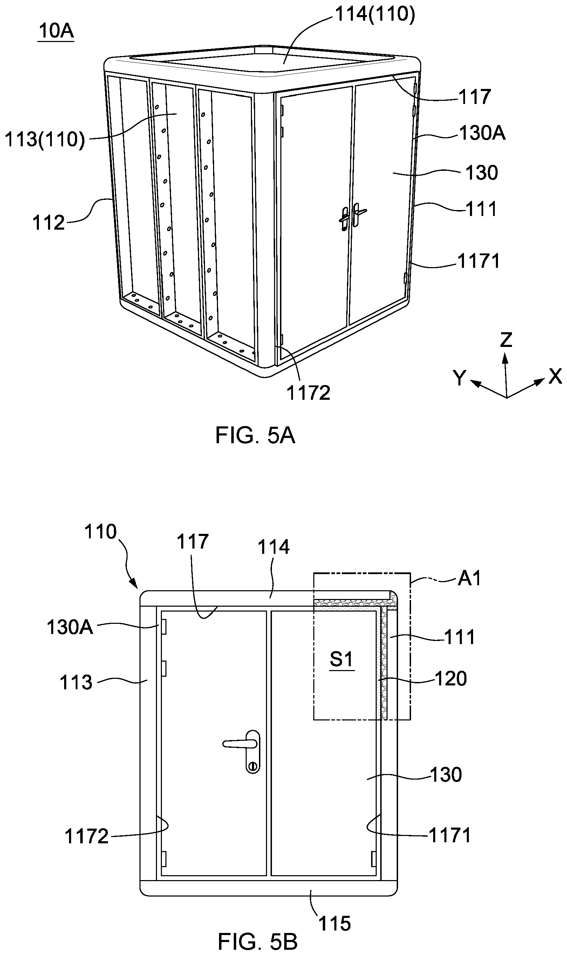

FIG. 5A is a schematic view of a movable cabinet 10A in accordance with some embodiments of the present disclosure.

In some embodiments, the one or more walls of the concrete main body 110 may have a non-plate structure. In some embodiments, the wall 114 (or the top plate) of the concrete main body 110 has a recess structure formed from surrounding protruded ribs. In some embodiments, the wall 113 (or the sidewall) of the concrete main body 110 has vertical ribs, and these vertical ribs define a plurlaity of recess regions. In some embodiments, the vertical ribs of the wall 113 of the concrete main body 110 have through holes. These through holes may have locking functions, for example, assembling a pluraltiy of concrete plates into the wall 113, and/or assembling the wall 113 to the adjacent walls 112, 114, and 115. In some embodiments, the one or more walls of the concrete main body 110 may have various sterero-shapes, e.g., a tubular shape, a wavy shape, an irregular shape, etc., for aesthetic purposes. In some embodiments, the door 130 may be pivotally connected to the lateral edges (e.g., the lateral edge 1171 and 1172) of the opening 117 of the concrete main body 110.

FIG. 5B is a schematic view of a door 130 of a movable cabinet 10A and a partial perspective view of a concrete main body 110 and a flame retardant material layer 120 in accordance with some embodiments of the present disclosure. In some embodiments, the region designated by the dashed frame A1 represents a partial perspective view of the concreate main body 110 and the flame retardant material layer 120 with the door 130 and the door frame 130A removed.

In some embodiments, the door 130 includes two door plates that open in opposite directions and pivotally connect to the lateral edges 1171 and 1172 of the opening 117 of the concrete main body 110, respectively. In some embodiments, the door 130 may be pivotally connected to the lateral edges 1171 and 1172 of the opening 117 of the concrete main body 110 through the door frame 130A. In some embodiments, the door 130 may be a refractory door, and the door frame 130A may include a refractory material. In some embodiments, the door 130 of the movable cabinet 10A may include a single door plate pivotally connected to the lateral edge 1171 or the lateral edge 1172 of the opening 117 of the concrete main body 110. In some embodiments, please also refer to FIG. 5A, the movable cabinet 10A may further include one or more doors located at one or more of the wall 111, the wall 112, and the wall 113.

In some embodiments, as shown in FIG. 5B, the door frame 130A is disposed on the concrete main body 110, and the flame retardant material layer 120 is disposed on the concrete main body 110. In some emboidments, the door frame 130A is disposed on the inner surface of the wall of the concrete main body 110, and the flame retardant material layer 120 is disposed on the inner surface of the wall of the concrete main body 110. In some embodiments, the door frame 130A covers the flame retardant material layer 120 as viewed in a direction from the opening 117 toward the accommodating space S1.

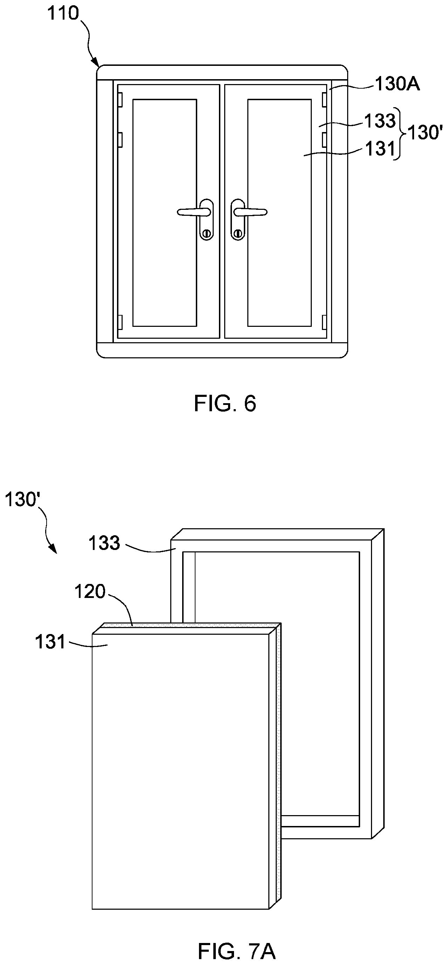

FIG. 6 is a schematic view of a door 130' of a movable cabinet 10A in accordance with some embodiments of the present disclosure.

In some embodiments, the door 130' includes a concrete layer 131. In some embodiments, the flame retardant material layer 120 is further disposed on the concrete layer 131 of the door 130'. In some embodiments, the door 130' further includes a door plate frame 133, and the concrete layer 131 is dispsoed in the door plate frame 133. In some embodiments, the door frame 130A and the door plate frame 133 may include a refractory material. In some embodiments, the concrete main body 110 is formed of an UHPC. In some embodiments, the concrete layer 131 and the concrete main body 110 are formed of the same material.

FIG. 7A is an exploded view of a door 130' of a movable cabinet 10A in accordance with some embodiments of the present disclosure. In some embodiments, the aforesaid movable cabinets 10 and 10' may also include a door 130' shown in FIG. 7A.

In some embodiments, the single door plate of the door 130' includes a concrete layer 131 and a flame retardant material layer 120. The concrete layer 131 may directly contact the flame retardant material layer 120. In some embodiments, the single door plate of the door 130' may further include a flame retardant adhesive layer (e.g., the aforesaid flame retardant adhesive layer 160), and the flame retardant adhesive layer may be disposed between the concrete layer 131 and the flame retardant material layer 120.

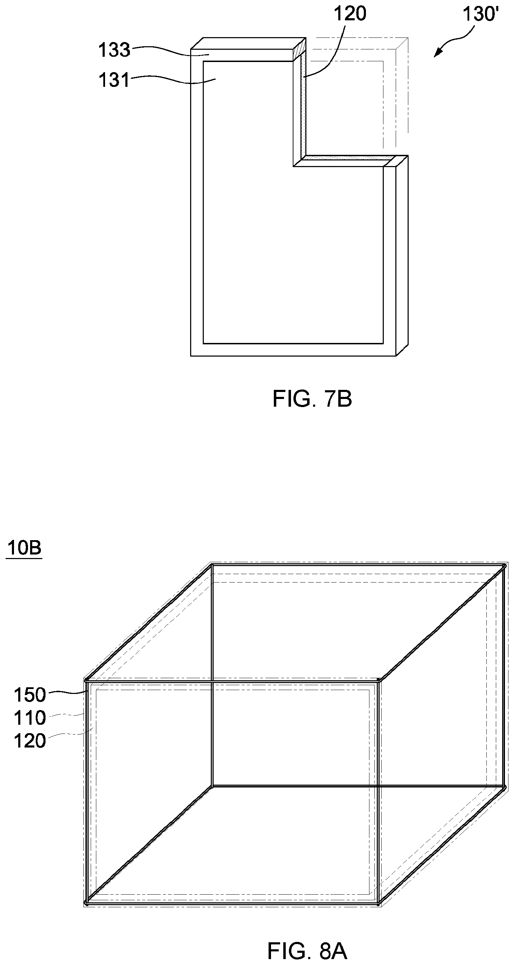

FIG. 7B is a partial cross-section of a door of a movable cabinet in accordance with some embodiments of the present disclosure.

In some embodiments, the concrete layer 131 and the flame retardant material layer 120 are both disposed in the door plate frame 133. The concrete layer 131 and the flame retardant material layer 120 may be assembled in the door plate frame 133 through snap connection, connectors (e.g., screws), or other suitable manner. In some embodiments, a total thickness of the concrete layer 131 and the flame retardant material layer 120 is equal to or less than a thickness of the door plate frame 133.

FIG. 8A is a perspective view of a movable cabinet 10B in accordance with some embodiments of the present disclosure.

In some embodiments, the movable cabinet 10B may further include a plurality of reinforcement steel bars 150 embedded in the concrete main body 110. In some embodiments, a width of the reinforcement steel bar 150 is less than a thickness of the wall of the concrete main body 110. In some embodiments, the reinforcement steel bars 150 are separated from the flame retardant material layer 120 by a portion of the concrete main body 110. In some embodiments, the reinforcement steel bars 150 extend along one or more edges of the concrete main body 110.

In some embodiments, the movable cabinet 10B does not include a metal plate. In some embodiments, the movable cabinet 10B does not include a metal plate that is adhered to the concrete main body 110 or embedded in the concrete main body 110. In some embodiments, the movable cabinet 10B does not include a reinforcement cage and/or a reinforcement assembly formed from a plurality of stirrups. In some embodiments, the movable cabinet 10B does not include a reinforcement cage and/or a reinforcement assembly formed from a plurality of stirrups connected to the concrete main body 110.

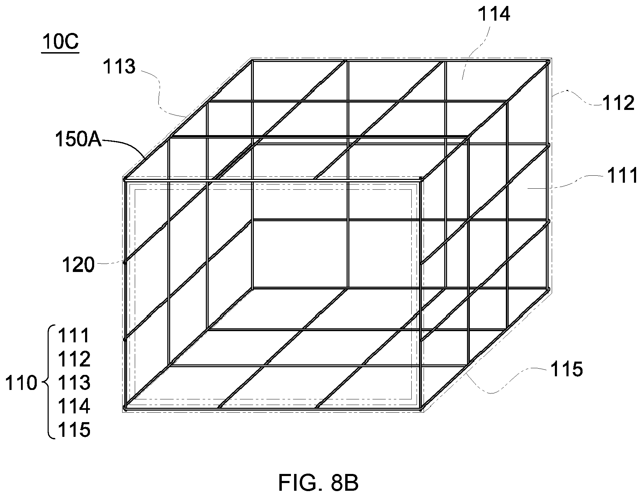

FIG. 8B is a perspective view of a movable cabinet 10C in accordance with some embodiments of the present disclosure. In some embodiments, the movable cabinet 10C is similar to the movable cabinet 10B, with differences therebetween that the reinforcement steel bars 150 are further embedded in one or more walls of the concrete main body 110.

Experimental results of exemplary embodiments for further illustrating the characteristics and advantages of the concrete main body of the movable cabinet according to some embodiments of the present disclosure are presented here. Table 1 shows the experimental conditions of embodiments E1, E2, E3, E4, and C1, and table 2 shows the test results of the embodiments E1, E2, E3, and E4. "Cement I" and "Cement II" are two different cements selected from a Type I Portland cement, a Type II Portland cement, a Type III Portland cement, a Type IV Portland cement, and a Type V Portland cement. "Particle material 1" is a silica fume, "Particle 2" is quartz powder, "Particle 3" is silica sand, "Additive 1" is a water reducing agent, "Additive 2" is a defoaming agent, and "Additive 3" is a swelling agent.

**Table 1**

| | Cement I | Cement II | Synthetic fibers | | | Particle material 1 |
|---|---|---|---|---|---|---|
| | kg/m³ | kg/m³ | Length (mm) | Diameter (mm) | kg/m³ | kg/m³ |
| E1 | 800-900 | 0 | 4-20 | 0.2 | 30~60 | 120-180 |
| E2 | 400-500 | 400-500 | | | | |
| E3 | 400-500 | 400-500 | | | | |
| E4 | 400-500 | 400-500 | | | | |
| C1 | 200-400 | - | - | - | - | - |
| C2 | 350-500 | - | - | - | - | - |
| | | | | | | |

| | Particle material 2 | Particle material 3 | Oxides | Additive 1 | Additiv e 2 | Additive 3 |
|---|---|---|---|---|---|---|
| | kg/m³ | kg/m³ | kg/m³ | kg/m³ | kg/m³ | kg/m³ |
| E1 | 120-150 | 900-1000 | 0-70 | 10-20 | 0-10 | 0-25 |
| E2 | 80-120 | | | | | |
| E3 | 30-60 | | | | | |
| E4 | 50-90 | | | | | |
| C1 | - | 600-800 | - | 2-5 | - | - |
| C2 | - | 800-1000 | - | 4-8 | - | - |

The cements, the particle materials, the oxides, and the additives of the embodiments shown in table 1 are mixed with water according to the proportion, and after stirring for several minutes, the synthetic fibers are added when the slurry is uniform and becomes a paste. Then, the slurry is stirred again until it is uniform, the slurry is then poured into a mold. Then, the slurry is cured at a curing temperature from 22°C to 24°C with a humidity from 50% to 95% for 3 days, and the mold is demolded. The finished product must be tested for mechanical properties after 28 days after demolding. The test results are shown in table 2.

**Table 2**

| | Unit weight (kg/m³) | Compressive strength (MPa) | Maximum bending strength (MPa) | Initial bending strength (MPa) | Coefficient of elasticity (GPa) | Tensile strength (MPa) | Contraction (mm/m) | Diffusion coefficient of chloride ion (m²/sec) | Thermal conductivity (W/m·K) |
|---|---|---|---|---|---|---|---|---|---|
| E1 | 2300 | 120 | ≥15 | ≥10 | ≥35 | >5 | < 300 | ≤5×10⁻¹³ | 1.60-1.80 |
| E2 | 2400 | 150 | ≥20 | | | | | | |
| E3 | 2500 | 180 | ≥25 | | | | | | |
| E4 | 2500 | 160 | ≥22 | | | | | | |
| C1 | 2300 | 28 | | | | | | | 1.90-2.10 |
| C2 | 2400 | 40 | | | | | | | |

According to the results shown in table 2, it is apparent that compared with a general concrete, the concrete main body according to some embodiments of the present disclosure has excellent mechanical properties. The concrete main body according to some embodiments of the present disclosure has a unit structural weight from about 2300 kg/m³ to about 2700 kg/m³, a compressive strength equalling or exceeding 120 MPa, and a maximum bending strength exceeding 15 MPa. In addition, the concrete main body according to some embodiments of the present disclosure has an initial bending strength exceeding 15 MPa, an coefficient of elasticity exceeding 35 GPa, and a tensile strength exceeding 5 MPa. Furthermore, the concrete main body according to some embodiments of the present disclosure has a contraction less than about 300mm/m, a diffusion coefficient of chloride ion less than about 5×10⁻¹³ m²/sec, and a thermal conductivity from about 1.6 W/m·K to about 1.8 W/m·K.

Besides, table 3 shows a comparison of the weight and the compressive ability of a concrete main body according to some embodiments of the present disclosure and various other materials. Among them, the concrete main body adopts the embodiment E3 in tables 1-2, and the general concrete adopts the embodiment C1 in tables 1-2.

**Table 3**

| | Volume | Weight | Compressive strength (MPa) | Height (cm) | Width (cm) |
|---|---|---|---|---|---|
| Concrete main body | 40×40×2cm³ | 8.4 kg | | | |
| General concrete | 40×40×2cm³ | 9.3 kg | | | |
| Concrete main body | | | 100 | 37 | 32 |
| Prestressed concrete | | | 100 | 70 | 35 |
| Reinforced concrete | | | 100 | 70 | 60 |

According to the results shown in table 3, it is apparent that compared with a general concrete, the concrete main body according to some embodiments of the present disclosure has a relatively light weight, which is beneficial to manufacturing a relatively light movable cabinet. In addition, compared with the prestressed concrete and the reinforced concrete, the concrete main body according to some embodiments of the present disclosure has a reduced thickness, which is beneficial to manufacturing relatively thin walls of the concrete main body.

In addition, experimental results of burning tests of the movable cabinet according to some embodiments of the present disclosure are described as follows. The composite structure of the movable cabinet includes the concrete main body 110 and the flame retardant material layer 120, and after the flame retardant material layer 120 was subjected to burning at a temperature of 1100°C±50°C for one hour, the flame retardant material layer 120 remained not penetrated, the composite structure including the concrete main body 110 and the flame retardant material layer 120 did not crack or burst, and the backside temperature of the concrete main body 110 was maintained at about 150°C or lower.

As used herein, the terms "approximately," "substantially," "substantial" and "about" are used to describe and account for small variations. When used in conjunction with an event or circumstance, the terms can refer to instances in which the event or circumstance occurs precisely as well as instances in which the event or circumstance occurs to a close approximation. For example, when used in conjunction with a numerical value, the terms can refer to a range of variation less than or equal to ±10% of said numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, two numerical values can be deemed to be "substantially" or "about" the same if a difference between the values is less than or equal to ±10% of an average of the values, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, "substantially" parallel can refer to a range of angular variation relative to 0° less than or equal to ±10°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, "substantially" perpendicular can refer to a range of angular variation relative to 90° less than or equal to ±10°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

Two surfaces can be deemed to be coplanar or substantially coplanar if a displacement between the two surfaces is no greater than 5µm, no greater than 2µm, no greater than 1µm, or no greater than 0.5µm.

As used herein, the terms "conductive," "electrically conductive" and "electrical conductivity" refer to an ability to transport an electric current. Electrically conductive materials typically indicate those materials that exhibit little or no opposition to the flow of an electric current. One measure of electrical conductivity is Siemens per meter (S/m). Typically, an electrically conductive material is one having a conductivity greater than approximately 104 S/m, such as at least 105 S/m or at least 106 S/m. The electrical conductivity of a material can sometimes vary with temperature. Unless otherwise specified, the electrical conductivity of a material is measured at room temperature.

As used herein, the singular terms "a," "an," and "the" may include plural referents unless the context clearly dictates otherwise. In the description of some embodiments, a component provided "on" or "over" another component can encompass cases where the former component is directly on (e.g., in physical contact with) the latter component, as well as cases where one or more intervening components are located between the former component and the latter component.

While the present disclosure has been described and illustrated with reference to specific embodiments thereof, these descriptions and illustrations do not limit the present disclosure. It can be clearly understood by those skilled in the art that various changes may be made, and equivalent components may be substituted within the embodiments without departing from the true spirit and scope of the present disclosure as defined by the appended claims. The illustrations may not necessarily be drawn to scale. There may be distinctions between the artistic renditions in the present disclosure and the actual apparatus, due to variables in manufacturing processes and the like. There may be other embodiments of the present disclosure which are not specifically illustrated. The specification and drawings are to be regarded as illustrative rather than restrictive. Modifications may be made to adapt a particular situation, material, composition of matter, method, or process to the objective, spirit and scope of the present disclosure. All such modifications are intended to be within the scope of the claims appended hereto. While the methods disclosed herein have been described with reference to particular operations performed in a particular order, it can be understood that these operations may be combined, sub-divided, or re-ordered forming an equivalent method without departing from the teachings of the present disclosure. Therefore, unless specifically indicated herein, the order and grouping of the operations are not limitations of the present disclosure.

## Claims

1. A movable cabinet, comprising:
a concrete main body comprising a plurality of walls forming an accommodating space; and
a flame retardant material layer disposed on one or more inner surfaces of the plurality of walls in the accommodating space, wherein the accommodating space is configured to accommodate at least one battery system, and the flame retardant material layer is exposed to the accommodating space.

2. The movable cabinet of Claim 1, wherein the concrete main body and the flame retardant material layer as a whole are configured to withstand a flame having a temperature equaling or exceeding 600°C.

3. The movable cabinet of Claim 1, wherein the concrete main body is formed of an ultra-high performance concrete (UHPC), and the flame retardant material layer directly contacts the plurality of walls of the concrete main body.

4. The movable cabinet of Claim 3, wherein the flame retardant material layer comprises a ceramic fiber board, a ceramic fiber blanket, a refractory clay, a thermally insulative refractory brick, or a combination thereof, and the movable cabinet is free of a metal plate, a reinforcement cage, a reinforcement assembly formed from a plurality of stirrups, or a combination thereof.

5. The movable cabinet of Claim 1, wherein the concrete main body comprises from 120 kg/m³ to 180 kg/m³ of a silica fume and from 30 kg/m³ to 150 kg/m³ of quartz powder, the concrete main body has a compressive strength of exceeding 120 MPa, and the concrete main body has a maximum bending strength of exceeding 15 MPa.

6. The movable cabinet of Claim 1, wherein the concrete main body has an unit structural weight from about 2300 kg/m³ to about 2700 kg/m³, and the concrete main body has a thermal conductivity from about 1.6 W/m·K to about 1.8 W/m·K.

7. The movable cabinet of Claim 1, wherein the concrete main body comprises from about 30 kg/m³ to about 60 kg/m³ of a synthetic fiber, each of the pluratlify of walls has a thickness of equal to or less than about 5cm, and the flame retardant material layer has a thickness of equal to or less than about 5cm.

8. The movable cabinet of Claim 1, wherein the concrete main body is integrally formed.

9. The movable cabinet of Claim 1, wherein the concrete main body further comprises a separation wall to separate the accommodating space into a plurality of sub-spaces, and the flame retardant material layer is disposed on two opposite surfaces of the separation wall.

10. The movable cabinet of Claim 1, further comprising a door pivotally connected to a lateral edge of an opening of the concrete main body, the door comprises a concrete layer, the concrete layer comprises a silica fume, quartz powder, a synthetic fiber, or a combination thereof, and the flame retardant material layer is further disposed on the concrete layer of the door.

11. The movable cabinet of Claim 1, further comprising a flame retardant adhesive layer disposed between the concrete main body and the flame retardant material layer, wherein the flame retardant material layer comprises a ceramic fiber board, a ceramic fiber blanket, a thermally insulative refractory brick, or a combination thereof, and the flame retardant adhesive layer comprises a refractory clay.

12. The movable cabinet of Claim 1, further comprising a hanger component locked to the concrete main body.

13. The movable cabinet of Claim 1, wherein the concrete main body comprises a silica fume, quartz powder, a synthetic fiber, or a combination thereof.

14. The movable cabinet of Claim 1, wherein the at least one battery system comprises a pluraltiy of battery packs each comprising a plurality of battery modules, and the at least one battery system is locked to an inner surface of at least one of the plurality of walls of the concrete main body.

15. The movable cabinet of Claim 14, wherein the at least one battery system is locked to the inner surface of at least one of the plurality of walls of the concrete main body through a locking mechanism, and the locking mechanism is further locked to the flame retardant material layer.
